# EUROPÄISCHE PATENTSCHRIFT

(11) **EP 0 801 015 B1**
(45) Veröffentlichungstag und Bekanntmachung des Hinweises auf die Patenterteilung: **24.11.1999**
(21) Anmeldenummer: 97104035.7
(22) Anmeldetag: 11.03.1997
(51) Int. Cl.: B65G 69/18, F16J 15/46, B65D 90/00, B65D 90/62

(54) **Dichtungssystem**
Sealing system
Système d'étanchéité

(30) Priorität: 12.04.1996 CH 92696
(43) Veröffentlichungstag der Anmeldung: 15.10.1997
(73) Patentinhaber: ANAG A. Nussbaumer AG, 3186 Düdingen (CH)
(72) Erfinder: Bitterli, Benno, 3095 Spiegel (CH)
(74) Vertreter: Révy von Belvárd, Peter

(56) Entgegenhaltungen:
- EP-A- 0 547 861
- EP-A- 0 680 897
- DE-U- 29 503 812
- GB-A- 2 291 049
- US-A- 4 469 152
- MUHR R: "SCHUETTGUTUMSCHLAG OHNE DICKE LUFT ABGEDICHTETE VERLADEGARNITUR VERHINDERT STAUBEMISSIONEN" CHEMIETECHNIK, Bd. 23, Nr. 7, 1.Juli 1994, Seite 16/17 XP000454649

## Beschreibung

Die Erfindung bezieht sich auf ein Dichtungssystem nach dem Oberbegriff des Anspruches 1. Ein derartiges Dichtungssystem ist aus der DE-U-295 03 812 bekannt geworden. Danach ist zwar ein Auslaufbereich eines ersten Behälters vorgesehen, aus dem Schüttgut in einen zweiten Behälter umgefüllt werden soll. Aber dies erfolgt nicht unmittelbar, vielmehr ist als Zwischenstück eine Art Rüssel vorhanden, der die beiden Behälter miteinander verbindet und gegenüber dem zweiten Behälter abgedichtet werden soll. Eine solche Ausführung ist für Mehl und andere unschädliche oder weniger heikle Substanzen unproblematisch. Es spielt auch keine Rolle, ob Mehl, im Falle einer Beschädigung des Rüssels oder durch Luftablassrohre, wie sie dort vorgesehen sind, hindurch austritt. Weder ist es selbst für die Umwelt gefährlich, noch könnte es mit der Umgebungsluft zu unliebsamen Reaktionen kommen.

Dagegen ist die Abdichtung bei Behältersystemen, bei denen ein unmittelbares 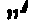 Andocken" der beiden Umfüllbehälter bzw. des Silos an den Auslaufteil 6 stattfinden soll, wesentlich kritischer. Während etwa im Falle des bekannten Rüssels sowohl das dichte Andocken als auch die Zufuhr von Druckmedium zur aufblasbaren Dichtung kein Problem darstellt, ist doch der Rüssel von allen Seiten her leicht zugänglich, ist dies ebenso wie die Abdichtung des Andockteiles 6 schon problematischer: Zum Ventilkegel kann man ja praktisch kaum dazugelangen, und zwischen dem Auslautteil und der Silowand ist auch nur wenig Platz, um das dichte Andocken zu sichern. Bei solchen gegeneinander beweglichen Baueinheiten, Körpern od. dgl. ist die Abdichtung nicht zuletzt deshalb schwierig, weil normale mehr oder weniger elastische Dichtungen von im wesentlichen vorgegebener Form sich bei der Bewegung der Körper bzw. Baueinheiten leicht abnützen. Dazu kommt, dass das dichte 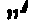 Andocken" der beiden Teile, ohne die Möglichkeit einer relativen Axialverschiebung ein Problem darstellt.

Zwar sind für andere Anwendungen, wie Rohrweichen, auch bereits aufblasbare Dichtungen vorgeschlagen worden, die nur dann in einen aufgeblasenen Zustand gebracht werden, wenn der jeweilige Körper in Ruhe ist und abgedichtet werden soll. Derartige Dichtungen legen sich im allgemeinen an eine ebene Fläche an, was keinerlei Probleme bereitet. Ein Beispiel einer aufblasbaren, sich an eine ebene Fläche anlegenden Dichtung ist der EP-B-0 114 278 zu entnehmen. Auch die Frage des Andockens stellt sich bei solchen Rohrweichen nicht.

Der Erfindung liegt daher die Aufgabe zugrunde, an einem, Behältersystem der eingangs erwähnten Art mit unmittelbarem 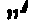 Andocken" eine wirksame Dichtung mit langer Standzeit zu schaffen und gleichzeitig ein dichtes Andocken zu sichern. Überraschenderweise gelingt die Lösung dieser Aufgabenstellung durch die kennzeichnenden Merkmale des Anspruches 1.

Da nun durch den an dem Dichtungsring ausbildbaren Wulst einerseits die Wirkung der Abdichtung aller relativ zueinander beweglichen Teile und anderseits eine Sperrwirkung gegen axiales Verschieben erzielt wird, vereinfacht sich die Konstruktion und wird kostengünstiger. Es hat sich auch gezeigt, dass - mangels gegeneinander bei der Bewegung reibender Teile bzw. infolge Verringerung der Reibung - die Standzeit der Dichtungsanordnung erfindungsgemäß erhöht werden kann.

Wird in weiterer Ausgestaltung der Erfindung die Aussenseite der relativ beweglichen Wand als Anlagefläche für die Ein- bzw. Auslaufanordnung vorgesehen und diese Wand vorzugsweise geneigt zur Achse des Behälters od.dgl. angeordnet, so ergibt sich eine vorteilhaft einfache Konstruktion.

Eine sehr gute Dichtung der in Wirkverbindung gebrachten Bauteile wird nach einer weiteren bevorzugten Ausführungsform der Erfindung dadurch erreicht, dass die, vorzugsweise radial aussenliegende, relativ bewegliche Wand mindestens eine Ringnut zur Aufnahme eines dichtenden Fortsatzes des Dichtungsringes aufweist. Diese Ringnut kann auch durch die Form einer Ringeindellung zur Aufnahme des dichtenden Fortsatzes gut wirksam sein.

Die Konstruktion des Dichtungssystems ist auch dadurch sehr einfach gehalten, dass nach einer weiteren bevorzugten Ausführungsform der Erfindung der Ventilkegel einen zur Befestigung des dichtenden Fortsatzes ausgebildeten Kegelrand aufweist. Hierdurch kann in vorteilhafter Weise eine formschlüssige Befestigung in einfacher Weise vorgenommen werden.

Besonders einfach und stabil kann die bauliche Ausgestaltung für die Zuführung des Druckfluids bzw. der Druckluft ausgebildet sein, wenn nach einem weiteren Merkmal der Erfindung als Zuleitungskanal ein einziger ringkegelförmiger Hohlraum des Ventilkegels vorgesehen ist.

Auch die nach einer weiteren bevorzugten Ausführungsform der Erfindung vorgeschlagenen Merkmale, dass zur Zuleitung des Druckfluids, der Druckluft od. dgl. an den mindestens einen Hohlraum des Dichtungsringes am und/oder im Ventilkegel mehrere radial, vorzugsweise abwärts, geführte Einzelleitungen vorgesehen sind, erbringt eine stabile, zuverlässige und betriebssichere Konstruktion.

Um die Betätigung der Dichtungsrichtung zuverlässig, selbsttätig und somit vorteilhaft einfach vornehmen zu können, wird nach weiterer bevorzugter Ausführungsform der Erfindung vorgeschlagen, dass zur Beaufschlagung des mindestens einen Hohlraumes des Dichtungsringes eine Steuereinrichtung vorgesehen ist, die über einen Antrieb des Ventilkegels, vorzugsweise synchron oder über einen Sensor, wie beispielsweise einen Taststift, für die Position insbesondere des Auslaufteiles zur relativ beweglichen Wand, aktivierbar ist.

Weitere Einzelheiten der Erfindung ergeben sich an Hand der nachfolgenden Beschreibung eines in der Zeichnung schematisch dargestellten Ausführungsbeispiels. Es zeigen:
- Fig. 1: einen herkömmlichen Behälter mit einem Dichtungsbereich, an dem die Erfindung zur Anwendung kommt, und
- Fig. 2: den Dichtungsbereich in grösserem Massstab mit einem erfindungsgemässen Dichtungsystem.

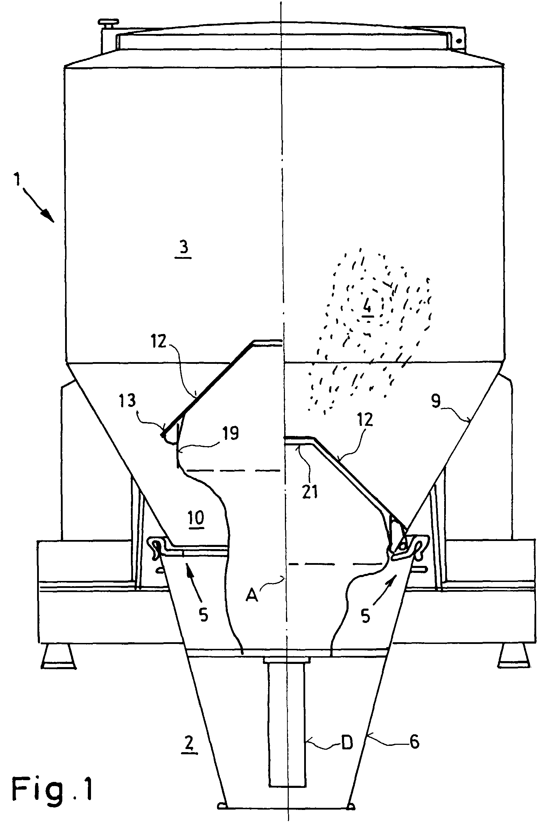

Fig. 1 zeigt einen Behälter 1 mit einem rieselfähiges Schüttgut 4 aufnehmendem Innenraum 3, einem Auslaufkonus 9 und einer in einem Auslaufbereich 10 daran angeschlossenen Auslaufanordnung 2. Die Auslaufanordnung 2 ist herkömmlich ein Auslauffrichter 6, könnte aber von einem an den siloartigen Behälter 1 angeschlossenen (z.B. kleineren) Umfüllbehälter gebildet sein.

Zum Verschliessen des Auslaufbereiches 10 gegen die Auslaufanordnung 2 hin ist ein mit der Unterseite des Auslaufkonus 9 zusammenwirkender, mit Hilfe eines fluidischen Antriebes D, wie eines pneumatischen Zylinders, aus der rechts in Fig. 1 gezeigten Verschlussstellung in die links dargestellte Offenstellung bringbarer, an einer Behälterachse A gelegener Ventilkegel 12 vorgesehen, der nach dem Öffnen (links in Fig. 1) zwischen seinem unteren Rande 13 und der Wandung des Auslaufkonus 9 einen Ringspalt freigibt, durch den, beispielsweise pulverförmiges, Material auszutreten vermag.

Bei der bekannten Ausführungsform ist zur Abdichtung zwischen dem, (besonders im Falle eines Umfüllbehälters) gegebenenfalls an den Auslaufkonus 9 ansetzbaren und damit relativ zu diesem beweglichen Auslaufteil 6 bzw. dem Auslaufkonus 9 und dem relativ dazu beweglichen unteren Rande 13 des Ventilkegels 12 die Anordnung 5 aus Dichtungsringen vorgegebener, wenngleich elastisch verformbarer, Gestalt vorgesehen, die naturgemäss einer starken Abnützung, nicht zuletzt auch unter dem Einflusse des unter Umständen abrasiven Pulvermateriales 4, unterworfen ist und damit ihre Dichtungsfunktion nur unvollkommen auszuüben vermag.

Erfindungsgemäss wird nun eine aufblasbare Dichtung in Form eines Dichtungsringes 14 mit einem mit einer Fluidquelle, insbesondere einer Quelle für Druckluft, verbundenen Hohlraum 15 so angeordnet, dass sich der Dichtungsring 14 mit einer radial innen liegenden Wand an einer starren Wand 16 eines der relativ zueinander beweglichen Teile, z. B. des Ventilkegels 12, abstützt, aber in Radialrichtung nach aussen hin einem Freiraum, hier in Form eines Ringschlitzes S, gegenüberliegt, in den er sich zur Abdichtung gegen mindestens eine radial aussen liegende Wand 17 mindestens eines weiteren relativ beweglichen Teiles (relativ zum Ventilkegel 12), nämlich hier am Rande des Auslauftrichters 9, anlegt.

Es versteht sich, dass der Freiraum S sich nicht unbedingt parallel zur Achse A erstrecken muss, vielmehr könnte die Wand 17 der Wand 16 und dem aufblasbaren Dichtungsring 14 radial aussen gegenüberliegen. Durch die dargestellte Ausführung wird aber mit dem Dichtungsring 14 eine doppelte Abdichtung erreicht und damit die Konstruktion gegenüber der bekannten auch konstruktiv wesentlich vereinfacht und verbessert.

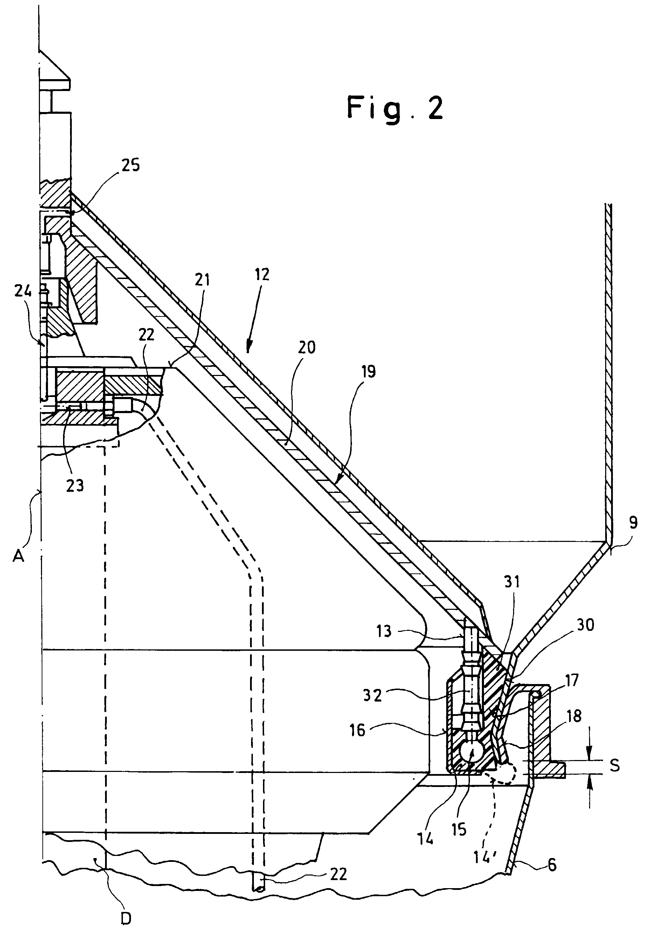

Dies erfolgt vorteilhaft so, dass die Aussenseite der Wand 17 gleichzeitig als Anlagefläche für den Auslaufteil 6 dient, der sich mit einer umgebördelten Stützwand 18 gegen die Aussenseite der Wandung 17 legt. Im Strichliert in Fig. 2 dargestellten, aufgeblasenen Zustande des Dichtungsringes 14, schiebt sich nun erfindungsgemäß ein Wulst 14' unter Abdichtung beider relativ zur Wandung 17 beweglicher Teile 12, 16 einerseits und 6, 18 anderseits, wobei der Auslaufteil 6 auch noch in axialer Richtung gegen axiales Verschieben gesichert wird. Diese Sperre gegen Verschieben ist, wie die Zeichnung zeigt, zunächst in Abwärtsrichtung durch den Wulst 14' selbst gegeben. In Aufwärtsrichtung aber ist der Auslaufteil 6 nach dem Andocken sowieso nicht mehr verschiebbar. In jedem Falle aber ist der Auslaufteil 6 durch den Wulst 14' in seiner angedockten Position verriegelt.

Dadurch, dass sich der Dichtungsring 14 fest an der radial innen gelegenen Wand 16 abstützt, kann an dieser Stelle seine Dichtfunktion nicht durch eine Bewegung beim Aufblasen in Frage gestellt werden. Eine Bewegung des Dichtungsringes 14 bzw. seines Wulstes 14' erfolgt ja nur in radialer Richtung nach aussen, wobei die Ausdehnung des Ringes 14 durch den in den Hohlraum 15 eingelassenen Innendruck für ein glattes und faltenfreies Anlegen an die Wandungen 17 und 18 sorgt.

Um die Aufgabe der doppelten Abdichtung, nämlich einerseits des Ventilkegels 12 gegenüber der Innenfläche der Wand 17 bzw. des Konus 9 und andererseits zwischen der Aussenfläche der Wand 17 und der umgebördelten Stützwand besser zu erfüllen, ist es vorteilhart, wenn der Dichtungsring einen eine Abdichtungsfläche 30 bildenden Fortsatz 31 aufweist. Auch dieser Fortsatz 31 könnte in einer Ausführungsform aufblasbar ausgeführt werden, was durch eine entsprechende Abzweigung eines an den Kanal 19 angeschlossenen Zulaufrohres 32 ohne weiteres möglich wäre, doch wird dies nicht unbedingt erforderlich sein. Immerhin würde sich auch in diesem Falle ein aufblasbarer Dichtungsring mit einem inneren Hohlraum ergeben, der sich an der radial innen gelegenen Wand des Zulaufrohres 32 (oder einer entsprechenden radial innen gelegenen Wand) abstützt, und der auf die radial aussen gelegene Wand 17 zu einen Freiraum besitzt, der sein Aufblasen erlaubt, wobei sich sein Wulst nach aussen und oben aufwölben würde). Wenn hier von "radial" innen oder aussen die Rede ist, so bezieht sich dies auf die Achse A des gezeigten Auslaufes 2, 10.

Im Rahmen der Erfindung wäre es durchaus möglich, den Fortsatz 31 und den Dichtungsring 14 als gesonderte Dichtungselemente und den Fortsatz radial aufblasbar auszubilden. Es ist aber klar, dass durch die einstückige Ausbildung die Montage erleichtert und die Passgenauigkeit erhöht wird. Die radial äussere Wand kann dabei eine abweichend von der gezeigten konischen ausgebildete Wand, z. B. mit einer Ringeindellung zur Aufnahme des aufgeblasenen Fortsatzes 31, haben; eine konische Ausbildung auch im Bereiche der radial wirkenden Dichtungen ist jedoch bevorzugt. Bevorzugt ist es auch, wenn, wie dargestellt, der Kegelrand 13 des Ventilkegels 12 zum formschlüssigen Befestigen des Dichtungselementes 31 herangezogen wird.

Ein Problem, das bisher von der Anordnung solcher aufblasbarer Dichtungsringe 14 abgehalten hat, war die Frage der Zuleitung des Druckmediums. Denn dieses Problem ist naturgemäss leichter zu lösen, wenn der Dichtungsring - etwa im Sinne der Fig. 1 - an der radial aussen gelegenen Wand des Auslaufkonus 9 abgestützt wäre, über den eine Zuleitung für Druckmedium anzubringen, man konstruktiv relativ frei ist.

Im Rahmen der vorliegenden Erfindung kann dieses Problem in vorteilhafter einfacher Weise so gelöst werden, dass mit dem Ventilkegel 12 ein Zuleitungskanal 19 verbunden ist, indem der Kegel 12 beispielsweise eine Innenwand 20 aufweist. Diese Lösung ist insbesondere im Zusammenhang mit dem pneumatischen Antrieb D (Fig. 1) von Vorteil, weil so leicht die Druckluft vom Bereiche der Achse A aus dem Antriebsaggregat D oder parallel dazu in den Zuführkanal 19 und damit in den Hohlraum 15 geleitet werden kann.

Im dargestellten Ausführungsbeispiel ist eine Paralelleitung (Schlauch) 21 vorgesehen, dessen oberes Ende an einem Betätigungskegel 21 für den Ventilkegel 12 so befestigt ist, dass die von ihm zugeführte Luft über einen Querkanal 23 einem zentralen Kanal 24 und von dort über einen weiteren Querkanal 25 in den Zuführkanal 19 eingeblasen wird. Der Zuführkanal 19 kann ein einziger ringkegelförmiger Hohlraum des Ventilkegels 12 sein oder von einer oder von mehreren radial abwärts geführten einzelnen Leitungen gebildet sein.

Die Schaltung der Zufuhr von Druckfluid lässt sich durch die Verbindung mit dem Antrieb D bzw. dem Betätigungskegel 21 auch auf einfache Weise mit der Betätigung des Ventilkegels 12 synchronisieren, so dass Luft dann in den Hohlraum 15 eingelassen wird, wenn sich der Ventilkegel in seiner unteren Geschlossenlage (vgl. die rechte Stellung in Fig. 1) befindet. Gegebenenfalls könnte aber auch ein Sensor, z. B. ein Taststift, vorgesehen sein, um das Ansetzen des Auslaufteiles und dessen umgebördelter Wand 18 an die Wandung 17 zu überwachen und erst dann die Druckluft für den Hohlraum zum Einströmen zuzulassen.

Obwohl die Erfindung an Hand eines Behälters nach Fig. 1 erläutert wurde, bei dem die Achse A des Behälters 1 und des Auslaufes 2, 10 zusammenfallen, versteht es sich, dass die Erfindung keineswegs darauf beschränkt ist. Vielmehr wäre sie auch dort anwendbar, wo ein Behälter mindestens zwei, z. B. zitzenartige, Ausläufe besitzt, wobei deren Achsen auch nicht unbedingt parallel zur Behälterachse verlaufen müssen. Auch versteht es sich, dass die Erfindung zwar an Hand eines Auslaufes beschrieben wurde (was wegen der dort bestehenden grösseren Probleme bevorzugt ist, an sich aber auch an der Einlaufseite anwendbar wäre.

Der Antrieb des Verschlusses braucht nicht unbedingt von einem Zylinder D gebildet zu sein, obwohl dies die oben erläuterten Vorteile besitzt. Möglich wäre auch ein Drehmotor für die Drehung der genannten Wellen, der auch ein fluidischer, wie ein pneumatischer Motor sein könnte. Bei einem elektrischen Motor könnte ein Untersetzungsgetriebe mit der Verschlusswelle und/oder ein Übersetzungsgetriebe mit einem Gebläse oder einer Pumpe für Druckfluid zum Beliefern der Dichtung(en) 14 und/oder 31 vorgesehen werden. Drehmotoren müssten aber auch nicht fluchtend mit der Verschlussachse A angeordnet werden, sondern könnten, insbesondere bei Verwendung einer Hohlwelle, eine horizontale Motorwelle - bei seitlicher Anordnung des Motors - besitzen.

Es versteht sich ferner, dass zur Abdichtung nur zwischen den Wandungen 17 und dem Auslaufteil 6 eine aufblasbare Dichtung an der Aussenseite der Wandung 17 angeordnet sein, die mit der radial aussen gelegenen Wand des Teiles 6 zusammenwirkt. In diesem Falle kann die Zuleitung an der Aussenseite des Behälters 1 verlaufen.

## Patentansprüche

1. Dichtungssystem für eine Öffnung eines Behälters (1), an dem eine Ein- bzw. Auslaufanordnung (2) vorgesehen ist, wobei der Behälter (1) und diese Anordnung relativ zueinander bewegbar sind und ein, mindestens einen von einer Druckfluidquelle beaufschlagbaren Hohlraum (15) aufweisender, elastisch verformbarer Dichtkörper (14) zwischen dem Behälter (1) und der Ein- bzw. Auslaufanordnung (2) vorgesehen ist, und wobei der Dichtkörper (14) sich an einer innen gelegenen Wand (16) nach aussen hin ausdehnend abstützt, wobei der Dichtkörper ein aufblasbarer Dichtungsring (14) mit einem im aufgeblasenen Zustand des Dichtungsringes (14) sich ausbildenden Wulst (14') ist, **dadurch gekennzeichnet**, dass der Dichtungsring (14) sich an der radial innen gelegenen starren Wand (16) eines Ventilkegels (12) radial nach aussen gegen eine, relativ zum Ventilkegel (12) bewegliche, Wand (17) des Behälters (1) ausdehnend abstützt, dass die radial äussere Seite der beweglichen Wand (17) gleichzeitig als Anlagefläche für einen Ein- bzw. Auslaufteil (6) dient, und in Radialrichtung nach aussen für den Dichtungsring (14) ein Freiraum zweckmässig ein Ringschlitz (S), vorgesehen ist, der radial aussen von der relativ zum Ventilkegel (12) beweglichen Wand (17) begrenzt ist, wobei im aufgeblasenen Zustande des Dichtungsringes (14) sich der Wulst (14') des Dichtungsringes (14) unter Abdichtung der relativ zur Wand (17) beweglichen Teile (12, 16, 6, 18) wie des Ventilkegels (12) und des Ein- bzw. Auslaufteils (6) durch den Freiraum (S) hindurch und unter einen radial nach innen ragenden Wandteil (18) des Ein- und Auslaufteiles (6) derart schiebt, dass dieser Ein- und Auslaufteil (6) in axialer Richtung gegen Verschieben entgegen der Sperre durch den Wulst (14') gesichert wird.

2. Dichtungssystem nach Anspruch 1, dadurch gekennzeichnet, dass die Aussenseite der relativ beweglichen Wand (17) als Anlagefläche für die Ein- bzw. Auslaufanordnung (2) vorgesehen ist, wobei diese Wand (17) vorzugsweise geneigt zur Achse (A) des Behälters (1) angeordnet ist.

3. Dichtungssystem nach Anspruch 1 oder 2, dadurch gekennzeichnet, dass der Dichtungsring (14) einen eine Abdichtungsfläche (30) bildenden, insbesondere aufblasbaren, Fortsatz (31) aufweist, der sich gegen die Innenfläche der relativ beweglichen Wand (17) anlegt.

4. Dichtungssystem nach Anspruch 3, dadurch gekennzeichnet,dass die, vorzugsweise radial aussenliegende, relativ bewegliche Wand (17) mindestens eine Ringnut zur Aufnahme des dichtenden Fortsatzes (31) aufweist.

5. Dichtungssystem nach Anspruch 3 oder 4, dadurch gekennzeichnet, dass der Ventilkegel (12) einen zur Befestigung des dichtenden Fortsatzes (31) ausgebildeten Kegelrand (13) aufweist.

6. Dichtungssystem nach einem der vorhergehenden Ansprüche, dadurch gekennzeichnet, dass zur Zuleitung von Druckfluid mindestens an den Hohlraum (15) des Dichtungsringes (14) ein Zuleitungskanal (19) mit einem zur Ein- bzw. Auslaufanordnung gehörigen Ventilkegel (12) verbunden ist.

7. Dichtungssystem nach Anspruch 6, dadurch gekennzeichnet, dass als Zuleitungskanal (19) für die Zuleitung von Druckfluid ein einziger ringkegelförmiger Hohlraum des Ventilkegels (12) vorgesehen ist.

8. Dichtungssystem nach einem der vorhergehenden Ansprüche, dadurch gekennzeichnet, dass zur Zuleitung von Druckfluid an den mindestens einen Hohlraum (15) des Dichtungsringes (14) am und/oder im Ventilkegel (12) mehrere radial, vorzugsweise abwärts, geführte Einzelleitungen vorgesehen sind.

9. Dichtungssystem nach einem der vorhergehenden Ansprüche, dadurch gekennzeichnet, dass zur Beaufschlagung des mindestens einen Hohlraumes (15) des Dichtungsringes (14) eine Steuereinrichtung vorgesehen ist, die über einen Antrieb (D) des Ventilkegels (12), vorzugsweise synchron oder über einen Sensor, beipielsweise einen Taststift, für die Position eines beweglichen Teiles der Auslaufanordnung zur relativ beweglichen Wand (17), aktivierbar ist.

## Claims

1. A sealing system for an opening of a container (1) on which an inlet or outlet opening (2) is provided, wherein the container (7) and said arrangement are movable in relation to each other, and an elastically deformable sealing body (14), which comprises at least one cavity (15) which can be acted upon by a pressurised fluid source, is provided between the container (1) and the inlet or outlet arrangement (2), and wherein the sealing body (14) is outwardly dilatably supported on an inwardly placed wall (16), wherein the sealing body is an inflatable sealing ring (14) comprising a bead (14') which is formed in the inflated state of the sealing ring (14), **characterised in that** the sealing ring (14) is supported on a radially inwardly placed rigid wall (16) of a valve cone (12) so that the sealing ring can dilate radially outwards towards a wall (17) of the container (1) which can move in relation to the valve cone (12), that the radially outer face of the movable wall (17) simultaneously serves as a contact face for an inlet or outlet part (6), and a free space, advantageously an annular channel (S), for the sealing ring (14) is provided in a radially outward direction, which free space is radially outwardly delimited by the wall (17) which can move in relation to the valve cone (12), wherein in the inflated state of the sealing ring (14) the bead (14') of the sealing ring (14) moves through the free space (S) and under a radially inwardly projecting wall part (18) of the inlet and outlet part (6), whilst sealing the parts (12, 16, 6, 18) which can move in relation to the wall (17), such as the valve cone (12) and the inlet or outlet part (6), in such a way that said inlet and outlet part (6) is axially secured by the bead (14') against displacement counter to the locking arrangement.

2. A sealing system according to claim 1, characterised in that the outer face of the relatively movable wall (17) is provided as a contact face for the inlet or outlet arrangement (2), wherein said wall (17) is preferably disposed sloping in relation to the axis (A) of the container (1).

3. A sealing system according to claims 1 or 2, characterised in that the sealing ring (14) comprises an extension (31), particularly an inflatable extension, which forms a sealing face (30) and which is seated against the inner face of the relatively movable wall (17).

4. A sealing system according to claim 3, characterised in that relatively movable wall (17), which is preferably disposed radially outwardly, comprises at least one annular groove for receiving the sealing extension (31).

5. A sealing system according to claims 3 or 4, characterised in that the valve cone (12) comprises a cone edge (13) which is constructed for the fixation of the sealing extension (31).

6. A sealing system according to any one of the preceding claims, characterised in that, in order to supply pressurised fluid at least to the cavity (15) of the sealing ring (14), a supply channel (19) is connected to the valve cone (12) which forms part of the inlet or outlet arrangement.

7. A sealing system according to claim 6, characterised in that a single conical annular cavity of the valve cone (12) is provided as a supply channel (19) for the supply of pressurised fluid.

8. A sealing system according to any one of the preceding claims, characterised in that a plurality of radially guided, preferably radially downwardly guided, separate lines is provided on and/or in the valve cone (12) for the supply of pressurised fluid to the at least one cavity (15) of the sealing ring (14).

9. A sealing system according to any one of the preceding claims, characterised in that a controller is provided for acting upon the at least one cavity (15) of the sealing ring (14), which controller can be activated via a drive (D) of the valve cone (12), preferably synchronously therewith or via a sensor, for example a feeler pin, for the position of a movable part of the outlet arrangement in relation to the relatively movable wall (17).

## Revendications

1. Système d'étanchéité pour l'ouverture d'un récipient (1), auquel est prévu un dispositif d'introduction et de décharge (2), le récipient (1) et ce dispositif (2) étant mobiles l'un par rapport à l'autre, et un corps d'étanchéité (14), déformable élastiquement, présentant au moins un espace libre (15) pouvant être relié à une source de fluide sous pression, étant prévu entre le récipient (1) et le dispositif d'introduction et de décharge (2), et le corps d'étanchéité (14) s'appuyant en s'étendant vers l'extérieur sur une paroi (16) située du côté intérieur, le corps d'étanchéité (14) étant un anneau d'étanchéité gonflable (14) avec un bourrelet (14') se formant lorsque l'anneau d'étanchéité gonflable (14) est gonflé, caractérisé en ce que, en se dilatant, l'anneau d'étanchéité (14) s'appuie radialement vers l'extérieur sur la paroi rigide (16) située radialement du côté intérieur d'un cône de soupape (12), contre une paroi (17), mobile par rapport au cône de soupape (12), du récipient (1), en ce que le côté radialement extérieur de la paroi mobile (17) sert en même temps de surface d'appui pour une trémie d'introduction ou de décharge (6), et en ce que, pour l'anneau d'étanchéité (14), un espace libre, utilement un interstice annulaire (S), est prévu en direction radiale vers l'extérieur, lequel est limité radialement vers l'extérieur par la paroi (17) mobile par rapport au cône de soupape (12), le bourrelet (14') de l'anneau d'étanchéité (14) glissant, lorsque l'anneau d'étanchéité (14) est gonflé, de telle façon à travers l'espace libre (S) et en dessous d'une partie de paroi (18) dépassant radialement vers l'intérieur de la trémie d'introduction ou de décharge (6) en étanchant les parties mobiles (12, 16, 6, 18) par rapport à la paroi (17) ainsi que le cône de soupape (12) et la trémie d'introduction ou de décharge (6) que cette trémie d'introduction ou de décharge (6) est bloquée par le bourrelet (14') en direction axiale contre le déplacement à l'encontre du blocage.

2. Système d'étanchéité suivant la revendication 1, caractérisé en ce que le côté extérieur de la paroi relativement mobile (17) sert de surface d'appui pour le dispositif d'introduction et de décharge (2), cette paroi (17) étant de préférence inclinée par rapport à l'axe (A) du récipient (1).

3. Système d'étanchéité suivant la revendication 1 ou 2, caractérisé en ce que l'anneau d'étanchéité (14) présente un prolongement (31), en particulier gonflable, formant une surface d'étanchéité (30), qui se place contre la surface intérieure de la paroi relativement mobile (17).

4. Système d'étanchéité suivant la revendication 3, caractérisé en ce que la paroi relativement mobile (17), située de préférence radialement à l'extérieur, présente au moins une rainure annulaire pour recevoir le prolongement d'étanchéité (31).

5. Système d'étanchéité suivant la revendication 3 ou 4, caractérisé en ce que le cône de soupape (12) présente un bord de cône (13) formé pour la fixation du prolongement d'étanchéité (31).

6. Système d'étanchéité suivant l'une des revendications précédentes, caractérisé en ce que, pour amener un fluide de pression au moins dans l'espace libre (15) de l'anneau d'étanchéité (14), un canal d'amenée (19) est relié à un cône de soupape (12) appartenant au dispositif d'introduction et de décharge.

7. Système d'étanchéité suivant la revendication 6, caractérisé en ce qu'un seul espace libre en forme de cône annulaire du cône de soupape (12) est prévu comme canal d'amenée (19) pour l'amenée de fluide de pression.

8. Système d'étanchéité suivant l'une des revendications précédentes, caractérisé en ce qu'une ou plusieurs tuyauteries individuelles radiales, de préférence orientées vers le bas, sont prévues pour amener un fluide de pression dans l'au moins un espace libre (15) de l'anneau d'étanchéité (14) au ou dans le cône de soupape (12).

9. Système d'étanchéité suivant l'une des revendications précédentes, caractérisé en ce que, pour mettre sous pression l'au moins un espace libre (15) de l'anneau d'étanchéité (14), un dispositif de commande est prévu, lequel peut être activé par un mécanisme d'entraînement (D) du cône de soupape (12), de préférence de manière synchrone ou via un capteur, par exemple un palpeur, pour la position d'une partie mobile du dispositif de décharge par rapport à la paroi relativement mobile (17).
